# EUROPÄISCHE PATENTSCHRIFT

(11) **EP 2 214 928 B1**
(45) Veröffentlichungstag und Bekanntmachung des Hinweises auf die Patenterteilung: **08.05.2019**
(21) Anmeldenummer: 08844307.2
(22) Anmeldetag: 29.10.2008
(51) Int. Cl.: B60N 2/68

(54) **VERFAHREN ZUR HERSTELLUNG EINES LEHNENRAHMENS EINES KRAFTFAHRZEUGSITZES**
METHOD FOR MANUFACTURING OF A BACKREST FRAME OF AN AUTOMOTIVE VEHICLE SEAT
PROCÉDÉ DE PRODUCTION D'UN CADRE DE DOSSIER POUR UN SIÈGE DE VÉHICULE AUTOMOBILE

(30) Priorität: 29.10.2007 DE 102007051895
(43) Veröffentlichungstag der Anmeldung: 11.08.2010
(73) Patentinhaber: Adient Luxembourg Holding S.à r.l., 1855 Luxembourg (LU)
(72) Erfinder: GROSS, Bernd, 40764 Langenfeld (DE); DANNHEISIG, Andreas, 48336 Sassenberg (DE); STEPANKOWSKI, Marian, 70184 Stuttgart (DE); HESTERBERG, Joshua, 40822 Mettmann (DE)
(74) Vertreter: Wolff, Felix
(86) Internationale Anmeldenummer: PCT/EP2008/009129
(87) Internationale Veröffentlichungsnummer: WO 2009/056294

(56) Entgegenhaltungen:
- EP-A- 0 233 822
- WO-A-2006/055616
- WO-A-2008/049639
- DE-A1-102006 039 168
- US-A- 5 671 976

## Beschreibung

Die Erfindung betrifft ein Verfahren zur Herstellung eines Lehnenrahmens eines Kraftfahrzeugsitzes.

Die Mehrzahl aller heute in Serie befindlichen Kraftfahrzeugsitze weisen Strukturelemente mit einer Konstruktion unter Verwendung von Stahl mit verschiedensten Profilen und Blechen auf. Es sind jedoch auch Kraftfahrzeugsitze mit Strukturelementen in Leichtbauweise bekannt, die aus unterschiedlichen Materialien bestehen. Derartige Strukturelemente werden beispielsweise in der DE 10 2004 044 734, der DE 697 02 023 T2 sowie der DE 198 26 732 A1 offenbart. Diese Strukturelemente werden derzeit jedoch anders und in einer geringeren Stückzahl gefertigt als Strukturelemente aus Stahl und sind dadurch teurer in der Herstellung. DE 10 2006 039168 A1 offenbart eine Fahrzeugsitz-Rahmenstruktur und ein Verfahren zum Herstellen derselben. EP 0 233 822 A lehrt eine zusammengestellte Sitzarmatur mit Konstruktionsmodulen. US 5 671 976 A offenbart einen aus Modulen bestehenden Sitzrahmen für einen Fahrzeugsitz. WO 2008/049639 A offenbart ein Strukturelement für einen Fahrzeugsitz.

Es war deshalb die Aufgabe der vorliegenden Erfindung ein Verfahren zur Herstellung eines Lehnenrahmens eines Kraftfahrzeugsitzes zur Verfügung zu stellen, der auch in Leichtbauweise kostengünstig zur Verfügung gestellt werden kann.

Gelöst wird die Ausgabe durch ein Verfahren zur Herstellung eines Lehnenrahmens eines Kraftfahrzeugsitzes gemäß Anspruch 1. Beschrieben wird ein Kraftfahrzeugsitz, der sich in einer beliebigen Reihe in dem jeweiligen Kraftfahrzeug befinden kann. Es kann sich demnach um einen Vorder- oder Rücksitz handeln. Der Kraftfahrzeugsitz kann einer oder mehreren Personen Platz bieten. Bei dem Kraftfahrzeugsitz kann es sich demnach auch um eine Sitzbank handeln.

Der Kraftfahrzeugsitz weist einen Lehnenrahmen auf, der sich aus mehreren Bauteilen zusammensetzt, die zumindest teilweise miteinander verbunden sind. Zumindest eines dieser Bauteile ist vorzugsweise aus einem Leichtbauwerkstoff, beispielsweise Aluminium oder einer Aluminiumlegierung gefertigt. Die Bauteile können für unterschiedliche Verbindungsarten unterschiedlich ausgebildet sein. Beispielsweise kann dieses Bauteil eine etwas andere Ausgestaltung haben je nach dem, ob es mit dem anderen Bauteil verklebt oder verschweißt wird.

Es ist nun vorgesehen, dass bestimmte Bauteile beispielsweise in einer Stahlkonstruktion durch Bauteile in Leichtbauweise ersetzt werden können, ohne dass die Anschlussbauteile verändert werden müssen. Zusätzlich ist vorgesehen, dass ein Bauteil, je nach Verbindungsart mit dem anderen Bauteil, unterschiedlich ausgestaltet ist. Dadurch wird es möglich, mit ein und demselben Konstruktionsdesign auf einer Fahrzeugplattform verschiedene Ausführungsformen zu realisieren. Es kann somit sowohl eine "Low Cost Variante" bestehend aus Stahl als auch aus eine "High End Variante" bestehend aus einer Hybridbauweise zur Verfügung gestellt werden. Außerdem können unterschiedliche Verbindungsvarianten zum Einsatz kommen. Bei der Hybridvariante werden vorzugsweise Stahlbauteile mit Bauteilen, die nicht aus Stahl gefertigt sind, beispielsweise Leichtbauwerkstoff, wie beispielsweise Kunststoff, Aluminium und/oder einer Aluminiumlegierung oder deren Kombination verwendet. Dabei wird das Hybriddesign immer deutlich leichter sein als die konventionelle Stahllösung. Ein weiterer großer Vorteil des Kraftfahrzeugsitzes liegt darin, dass zur Herstellung der Strukturen nahezu die gleiche Produktionsausrüstung hinsichtlich Schweißroboter/-anlagen und Vorrichtungen verwendet werden können. Dadurch könnten die Produktionskosten und die damit verbundenen Investitionen insbesondere für die Herstellung des Kraftfahrzeugsitzes in Hybridbauweise ebenfalls deutlich gesenkt werden.

Der Lehnenrahmen stellt die Grundstruktur für eine Rückenlehne eines Kraftfahrzeugsitzes dar. An dem Lehnenrahmen wird in der Regel ein Recliner zur Verstellung der Neigung der Rückenlehne, die Befederung des Kraftfahrzeugsitzes, die Kopfstütze und gegebenenfalls Airbags angeordnet. Der Lehnenrahmen weist vorzugsweise Lehnenseitenteile auf, die durch eine untere Quertraverse und/oder eine obere Quertraverse miteinander verbunden sind. Bevorzugt ist die untere und/oder obere Quertraverse in Stahl oder als eine Leichtbauausführungsform ausgeführt. In beiden Fällen sind die Quertraversen vorzugsweise als Profile und/oder Pressteile ausgestaltet. Bei der Ausführung in Leichtbauweise handelt es sich vorzugsweise um ein extrudierbares Profil, besonders bevorzugt um ein Profil, das einen Leichtbauwerkstoff, vorzugsweise Aluminium, aufweist oder um ein Pressteil insbesondere aus einem Leichtbauwerkstoff, beispielsweise Aluminium.

Vorzugsweise weist der Lehnenrahmen und/oder die Quertraverse eine Beschichtung mit Aluminium, Zink, einer Aluminiumlegierung und/oder einer Zinklegierung auf. Dies ist vorteilhaft für eine stoffschlüssige Verbindung, insbesondere fürs Laserschweißen, Laserhybridschweißen, Läserlöten oder CMT-Schweißen.

Bevorzugt sind mindestens eine Quertraverse und die Lehnenseitenteile jeweils in einem Verbindungsbereich miteinander verbunden. Bei dieser Verbindung in dem Verbindungsbereich handelt es sich um eine Laserschweiß-, Laserhybridschweiß, Laserbrazing- Löt-, Löthybrid- und/oder Klebeverbindung. Besonders bevorzugt werden die Teile durch Cold Metal Transfer CMT-Schweißen oder Kleben miteinander verbunden. Ganz besonders bevorzugt werden beim Fügen Stahl und ein Leichtbauwerkstoff insbesondere Aluminium oder eine Aluminiumlegierung miteinander verbunden.

Vorzugsweise weist die Verbindung zusätzlich einen Form- und/oder Kraftschluss auf, der besonders bevorzugt, beispielweise durch Nieten, Tulpen, Durchsetzfügen (Toxen), Bördeln und/oder Schrauben.

Vorzugsweise weist die Schweiß/Löt-Verbindung im Verbindungsbereich zwischen dem Seitenteil und der Quertraverse drei Abschnitte auf. In einer weiteren Ausführungsform ist mindestens ein Abschnitt zumindest abschnittsweise gekrümmt, besonders bevorzugt kreissegmentförmig. Bei mehreren Abschnitten ist besonders bevorzugt ein Abschnitt länger als ein anderer. Vorzugsweise beträgt die Länge eines Abschnitts zwischen 20 und 100 mm pro Verbindungsbereich für die obere und für die untere Traverse. Bei mehreren Abschnitten befinden sich die Abschnitte vorzugsweise in unterschiedlichen Ebenen, die insbesondere winklig zueinander angeordnet sind.

Vorzugsweise bleibt an den Lehnenseitenteilen und/oder an den Unterbauseitenteilen angeordnete Verbindungsbereich unverändert. Dadurch können immer dieselben Seitenteile verwendet werden unabhängig davon, ob die sie verbindenden Bauteile in Stahl oder aus einem Leichtbaumaterial ausgeführt sind und/oder unabhängig von der Art der Verbindung. Dadurch ergeben sich erheblich Lagerhaltungs- und Produktionsvorteile.

Vorzugsweise weisen die Quertraversen in Leichtbauweise einen größeren Querschnitt auf als in der Stahlausführung. Bei der Gestaltung des Verbindungsbereichs muss dem Rechnung getragen werden. Er muss so konstruiert sein, dass genug Raum für das Bauteil mit dem größten Querschnitt vorhanden ist. Für die Verbindung von zwei Teilen, die beide aus Stahl oder einem Leichtbauwerkstoff, beispielsweise Aluminium, gefertigt sind, muss dann gegebenenfalls ein Adapter vorgesehen werden, um eine geeignete Verbindung zu erzielen. Alternativ kann ein Stahlteil oder Aluminiumteil im Verbindungsbereich aufgeweitet werden, beispielsweise durch Hydroforming. Weiterhin ist es auch möglich, die Quertraversen und/oder das Bauteil unabhängig vom Werkstoff mit demselben Außendurchmesser zu versehen und die Wandstärke der Bauteile zu variieren. Eine Quertraverse oder ein Bauteil aus einem Leichtbauwerkstoff hat dann vorzugsweise eine größere Wandstärke als ein Quertraverse/Bauteil aus Stahl. Dadurch kann auf einen Adapter verzichtet werden.

Vorzugsweise weist das Lehnenseitenteil einen Verbindungsbereich auf. Besonders bevorzugt bleibt dieser Verbindungsbereich unabhängig von der Verbindungsart mit der Quertraverse unverändert; d.h. das Lehnenseitenteil kann mit der Quertraverse beispielsweise verschweißt, gelötet oder verklebt werden, ohne dass das Lehnenteil verändert werden muss.

Besonders bevorzugt wird der Verbindungsbereich des Lehnenseitenteils für eine Klebeverbindung dimensioniert. Da der Verbindungsbereich für eine Klebeverbindung etwas größer ist als für eine Schweiß/Löt-verbindung, kann dann in diesem Verbindungsbereich eine Quertraverse durch Kleben und durch Schweißen/Löten angeordnet werden, ohne dass das Lehnenteil verändert werden muss.

Vorzugsweise weist die Quertraverse einen Verbindungsbereich auf, der je nach Verbindungsart unterschiedlich gestaltet ist. Besonders bevorzugt werden alle Quertraversen zunächst für eine Klebeverbindung passend gefertigt. Dadurch reduziert sich die Lagerhaltung. Soll die Quertraverse dann durch Schweißen/Löten mit dem Seitenteil verbunden werden, wird die Quertraverse, insbesondere spanabhebend oder durch Stanzen nachbearbeitet. Beim Nachbearbeiten wird insbesondere die Kontaktfläche der Quertraverse vermindert und dabei vorzugsweise die für eine Schweiß/Löt-verbindung vorhandene Kontur an der Quertraverse vergrößert.

Der Gegenstand der vorliegenden Erfindung ist ein Verfahren zur Herstellung eines Lehnenrahmens eines Fahrzeugsitzes gemäß Anspruch 1. Vorzugsweise wird mindestens eine Schweißverbindung zumindest abschnittsweise gekrümmt ausgeführt.

Weiterhin bevorzugt wird mindestens eine Schweißverbindung kreissegmentförmig gestaltet.

Erfindungsgemäß wird der Verbindungsbereich der zweiten Bauteile eines Lehnenrahmens vor dem Schweißen von einem Klebeteil in ein Schweißteil umgewandelt. Dies erfolgt insbesondere durch Entfernung von Teilen der Klebefläche, so dass sich die Kontur, entlang derer geschweißt werden kann, erhöht.

Im Folgenden wird die Erfindung anhand eines Beispiels für einen Vordersitz und der Figuren 1 bis 15 erläutert. Diese Erläuterungen sind lediglich beispielhaft und schränken den allgemeinen Erfindungsgedanken nicht ein.
- Figur 1: zeigt einen Rückenlehnenrahmen.
- Figur 2: zeigt einen Unterbau eines Kraftfahrzeugsitzes.
- Figur 3: zeigt einen weiteren Rückenlehnenrahmen.

- Figur 4: zeigt die obere Traverse in zwei Ansichten.
- Figur 5: zeigt die untere Traverse in zwei Ansichten.
- Figur 6: zeigt die obere Traverse passend für eine Klebeverbindung.
- Figur 7: zeigt eine Klebeverbindung zwischen dem Lehnenseitenteil und der unteren Traverse.
- Figur 8: zeigt die untere Traverse als Klebe- und als Schweißteil.
- Figur 9: zeigt die obere Traverse als Klebe- und als Schweißteil.
- Figur 10: zeigt die obere Traverse, die als Schweißteil und als Klebeteil einsetzbar ist.
- Figur 11: zeigt die untere Traverse, die als Schweißteil und als Klebeteil einsetzbar ist.
- Figur 12: zeigt eine Verbindung der Quertraverse mit einem Unterbauseitenteil.
- Figur 13: zeigt eine Verbindung mit einer gekrümmten Schweiß- und/oder Lötverbindung.
- Figur 14: zeigt eine Verbindung mit einer kreisförmigen Schweiß- und/oder Lötverbindung.
- Figur 15: zeigt eine rechteckige Klebeverbindung

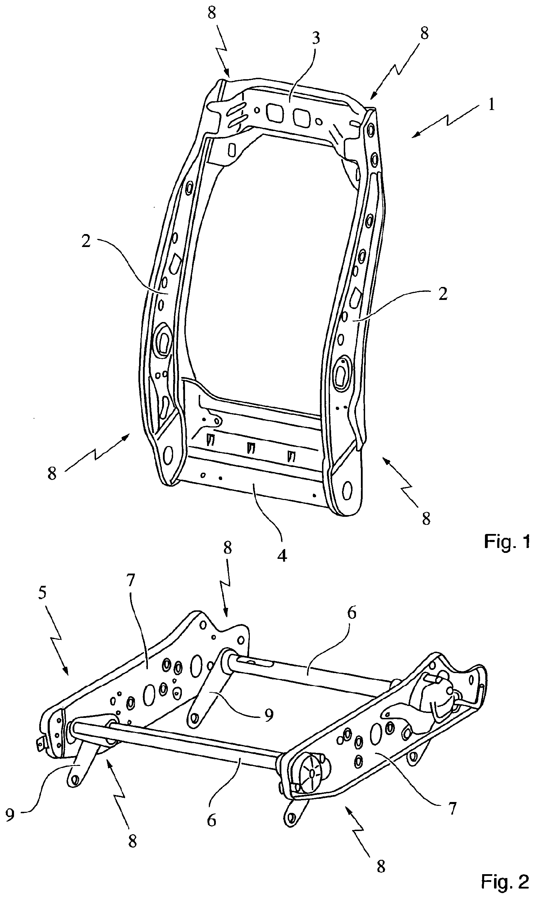

Figur 1 zeigt einen Lehnenrahmen 1, bestehend aus zwei Lehnenseitenteilen 2 aus hochfestem Stahl, einer oberen Quertraverse 3 sowie einer unteren Quertraverse 4, beide hergestellt aus Aluminium. Die obere und untere Quertraverse 3, 4 werden mittels eines CMT-Schweißverfahrens (Cold Metall Transfer) oder anderen Verbindungstechniken wie Kleben, mit den verzinkten (notwendig für CMT) oder blanken hochfesten Lehnenseitenteilen 2 verbunden. Dieses Schweißverfahren erlaubt es, die Aluminiumteile mit den verzinkten Stahlbauteilen zu verbinden. Die Schnittstellen, an denen die Quertraversen 3, 4 mit den Lehnenseitenteilen 2 verbunden sind, sind konstruktiv modular derart gestaltet, dass sie den wahlweisen Einbau von gewöhnlich in der Blechdicke dickeren Quertraversen 3, 4 aus Aluminium oder aber den Quertraversen 3, 4 bestehend aus Stahl (geringere Materialstärke bei identischem Design) erlauben, ohne dass die Lehnenseitenteile 2 angepasst werden müssten. Das bedeutet, dass mit identischen Lehnenseitenteilen 2 zwei Varianten eines Lehnenrahmens 1 angeboten werden können, und zwar die konventionelle Ausführung aus Stahl / Stahl wie auch die Hybridbauweise Stahl / Aluminium. Auch das Verbindungsverfahren kann für alle Konfigurationen gleichermaßen eingesetzt werden.

Figur 2 zeigt einen Unterbau 5 (Sitzteil mit 2-, 4-, ≥6- Wegeverstellung). Die Querrohre 6 aus Aluminium weisen einen größeren Querschnitt auf als die Querrohre 6 aus Stahl und/oder bei demselben Außendurchmesser eine größere Wandstärke als die Querrohre aus Stahl auf, um sich im Crashfall ähnlich zu verhalten. Die Unterbauseitenteile 7 bestehen weiterhin aus Stahl oder aus einem Leichtbauwerkstoff, beispielsweise Aluminium.

Die Querrohre werden in Bohrungen in den Unterbauseitenteilen gesteckt und dort vorzugsweise mit CMT-Schweißen verschweißt oder verklebt, wobei dies nur die 2-Wegeverstellung betrifft. Um zu gewährleisten, dass Querrohre mit unterschiedlichen Durchmessern verwendet werden können, ist die Bohrung nach dem Querschnitt des größten Querrohrs, dem Querrohr aus Aluminium bemessen. Bei der Verwendung von Stahlrohren mit einem kleineren Querschnitt kann dann mit Adapterhülsen gearbeitet. Das Stahlrohr kann im Verbindungsbereich auch aufgeweitet werden. Die Schwingen 9 sind aus Leichtmetall, Stahl und/oder beschichtetem Stahl gefertigt.

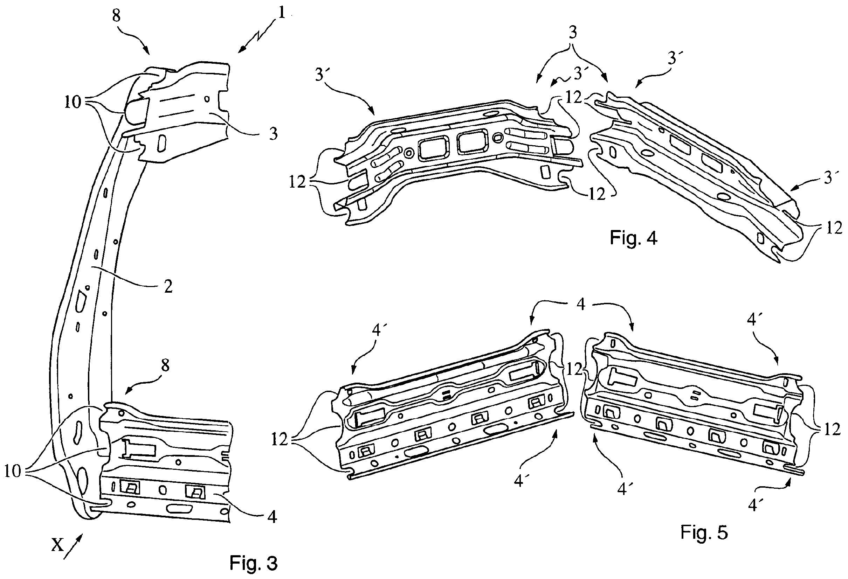

Figur 3 zeigt einen weiteren Lehnenrahmen 1. In dem vorliegenden Fall sind die obere Quertraverse 3 sowie die untere Quertraverse 4 durch Schweißen, insbesondere CMT-Schweißen (Cold -Metall-Schweißen), miteinander verbunden. Die obere und die untere Quertraverse werden dabei, wie durch den Pfeil gekennzeichnet, in x-Richtung in das Seitenteil eingelegt und dort vorzugsweise mit jeweils drei Schweißnahten verschweißt. Dieselbe Vorgehensweise erfolgt auch beim Kleben oder jeglicher sonstiger verbindender Bearbeitung des Seitenteils mit den Quertraversen. Dadurch wird vermieden, dass der Lehnenrahmen während der Bearbeitung bewegt werden muss, was den Bearbeitungsaufwand erheblich erhöht.

Die Figuren 4 und 5 zeigen die obere Quertraverse 3 bzw. die untere Quertraverse 4 jeweils in zwei Ansichten. Deutlich ist zu erkennen, dass sowohl die obere Quertraverse 3 in ihrem Verbindungsbereich 3' als auch die untere Quertraverse 4 in ihrem Verbindungsbereich 4' Konturen 12 aufweist, entlang derer die Verschweißung erfolgt. Diese Konturen 12 werden insbesondere durch Ausstanzen erzeugt. Durch diese Ausstanzung verlängert sich die Kontur und damit die Länge der Schweißnaht, die entlang der Kontur 12 gelegt wird, was die Stabilität der Verbindung mit dem Lehnenseitenteil erhöht.

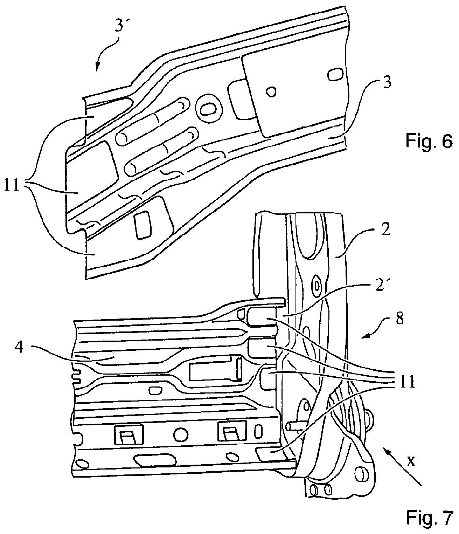

Figur 6 zeigt die obere Quertraverse 3, die in diesem Fall so gestaltet ist, dass sie im Verbindungsbereich 8 mit dem Lehnenseitenteil 2 verklebt werden kann. Dafür weist die Quertraverse 3 vorzugsweise drei Klebeflächen auf, wobei die untere Klebefläche besonders bevorzugt in einem rechten Winkel zu den beiden oberen Klebeflächen angeordnet ist, so dass das Bauteil in allen Richtungen vollständig an dem Lehnenseitenteil fixiert ist. Vorzugsweise wird diese Klebung besonders bevorzugt durch eine Tox-Verbindung (nicht dargestellt), d.h. eine Verbindung die mit Durchsetzfügen erzielt wird, kombiniert. Diese Form- und/oder Kraftschussverbindung dient insbesondere der Fixierung der Teile bis zum vollständigen Aushärten der Klebeverbindung. Aber auch danach erhöht diese Form- und/oder Kraftschussverbindung die Belastbarkeit des Lehnenrahmens.

Figur 7 zeigt die untere Quertraverse 4, die an das Lehnenseitenteil mittels der Klebeverbindungsstellen 11 geklebt ist. Auch diese Verbindung ist durch Tox-Verbindung (nicht dargestellt) ergänzt. Der Verbindungsbereich 2' des Seitenteils 2, d. h. der Bereich an dem die Quertraverse 4 an dem Seitenteil 2 anliegt, ist für eine Klebeverbindung dimensioniert. Da die für eine Klebeverbindung benötigte Verbindungsfläche in der Regel größer ist als für eine Schweißverbindung, ist dieser Bereich 2' jedoch gleichermaßen für eine Schweißverbindung geeignet. Dies gilt für den Verbindungsbereich 2', in dem die obere Quertraverse an dem Seitenteil 2 angeordnet wird, gleichermaßen.

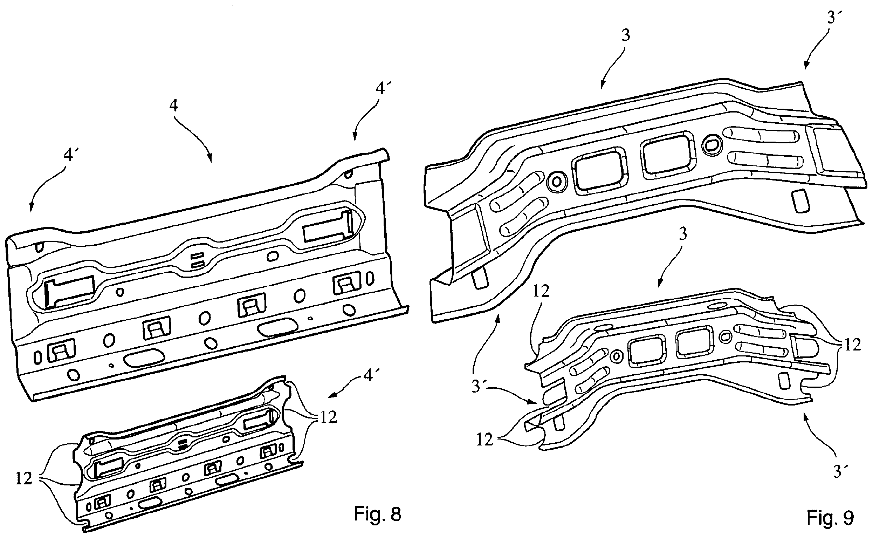

Figur 8 zeigt die untere Quertraverse 4. Die obere Darstellung zeigt die Quertraverse, die für eine Klebeverbindung insbesondere geeignet ist. Die untere Darstellung zeigt die Traverse, die insbesondere für eine Schweiß-/Lötverbindung geeignet ist. Die beiden Traversen unterscheiden sich lediglich durch die Schweißkontur 12. Zunächst werden alle Teile für eine Klebeverbindung passend hergestellt. Soll dann eine Quertraverse an das Lehnenseitenteil geschweißt werden, werden nachträglich Teile so aus dem Randbereich der Quertraverse ausgestanzt oder spannabhebend entfernt, dass sich die Schweiß-/Lötkontur 12 ergibt.

Figur 9 zeigt denselben Zusammenhang wie Figur 8, jedoch für die obere Quertraverse 3.

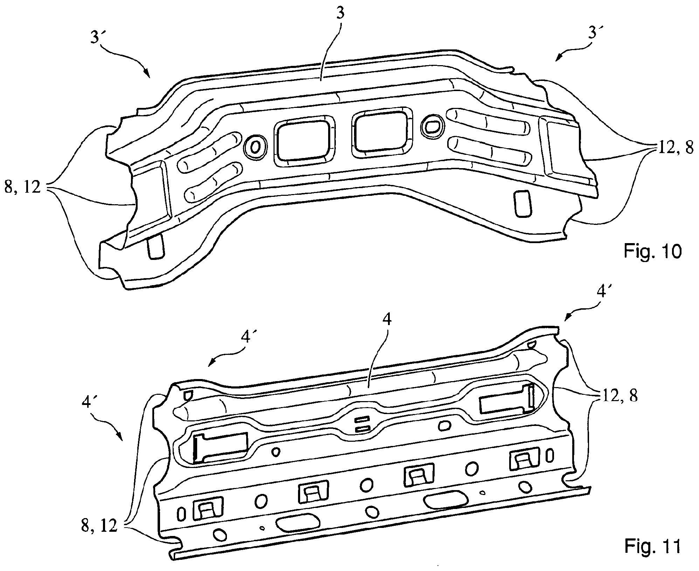

Figuren 10 und 11 zeigen die obere und untere Quertraverse, die für eine Schweiß-/Lötverbindung und/oder Klebeverbindung geeignet sind. In diesem Fall sind die Traversen 3, 4 so gestaltet, dass sie ohne Veränderung mit dem Seitenteil 2 verbunden werden können, unabhängig davon, ob die die Verbindung durch Schweißen/Löten oder durch Kleben erfolgt. Ein Vergleich mit den Traversen 3, 4 in den Figuren 8 und 9 verdeutlicht, dass die Bereiche, die aus dem Randbereich entfernt worden sind kleiner sind als bei einer Quertraverse, die nur zum Schweißen geeignet ist (vgl. Figuren 8, 9 untere Darstellung). Dadurch bleibt die zum Kleben vorhandene Fläche vergleichsweise groß. Die fürs Schweißen/Löten vorhandene Schweißkontur 12 ist nicht so lang wie bei der Quertraverse gemäß den Figuren 8, 9 (untere Darstellung) jedoch länger als bei einer geraden Kontur sowie in jedem Fall ausreichend dimensioniert.

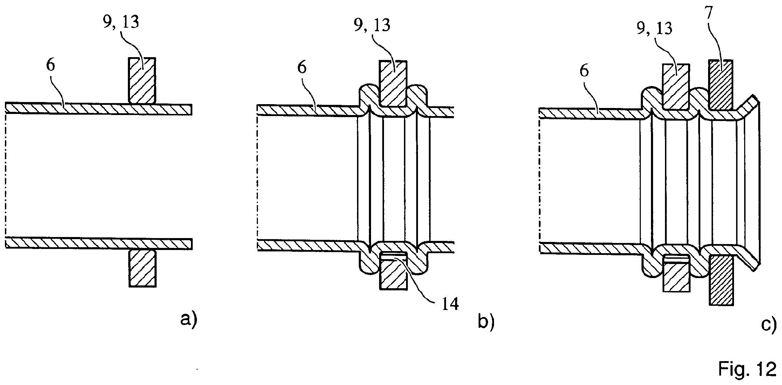

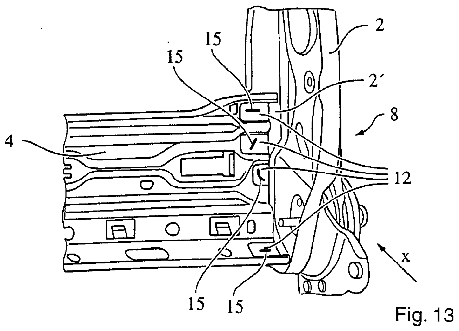

Figur 12 zeigt schematisch die Verbindung zwischen einem Querrohr 6 und einem Unterbauseitenteil 7 nach Figur 2. Zunächst wird ein Bauteil 13, das ein Teil eines Höhenverstellers (nicht dargestellt) ist und/oder mit einem Höhenversteller in Verbindung steht, über das Querrohr 6 geführt (Figur 13 a) und so dann mit dem Rohr durch Krimpen verbunden. Da das Teil 13 an seinem inneren Durchmesser Formschlussmittel 14 aufweist, ergibt sich dadurch eine axilialfixierte Verbindung, mit der auch Drehmomente übertragen werden können. Sodann erfolgt die Verbindung des Rohrs mit dem Sitzseitenteil 7 durch kegelförmiges Aufweiten des Randbereichs des Rohres 6. Diese Verbindung ist so gestaltet, dass sich das Rohr 6 in dem Seitenteil 7 drehen kann. Der Fachmann versteht, dass diese Verbindung auch drehmomentenfest ausgestaltet sein kann.

Figur 13 zeigt vier Verbindungsstellen mit jeweils einer Schweiß- und/oder Lötnaht 15. Die mittlere Naht ist als gekrümmte Naht ausgeführt. Der Fachmann versteht, dass auch mehrere Nähte gekrümmt ausgeführt sein können.

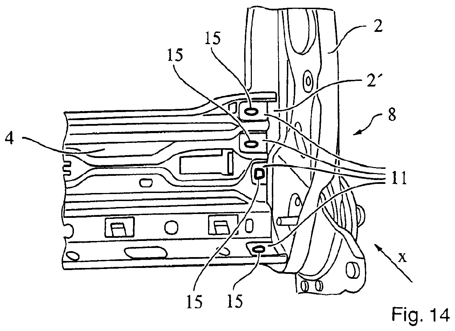

Figur 14 zeigt vier Verbindungsstellen mit jeweils einer Schweiß- und/oder Lötnaht 15. Alle Nähte sind kreisförmig gestaltet. Der Fachmann versteht, dass auch nur eine Naht kreisförmig ausgeführt sein kann und die anderen gerade, gekrümmt oder als Kreisbogensegment gestaltet sein können.

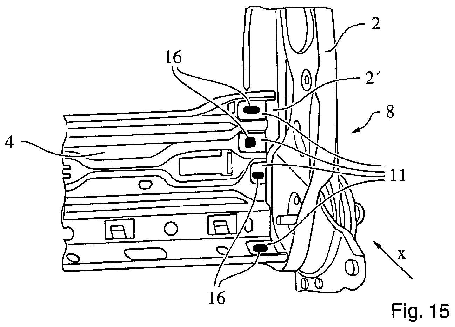

Figur 15 zeigt vier Verbindungsstellen mit jeweils einer rechteckigen Klebestelle.

### Bezugszeichenliste:

- 1: Lehnenrahmen
- 2: Lehnenseitenteil
- 2': Verbindungsbereich am Seitenteil
- 3: Quertraverse (oben)
- 3': Verbindungsbereich der Quertraverse
- **4**: Quertraverse (unten)
- **4'**: Verbindungsbereich der Quertraverse
- 5: Unterbau
- 6: Quertraverse, Querrohr, Bauteil
- 7: Unterbauseitenteil, Sitzseitenteil
- 8: Verbindungsbereich
- 9: Schwingen
- 10: Schweiß-/Lötverbindung
- 11: Klebeverbindungsstellen, form- und/oder kraftschlüssige Verbindungsstellen, Verbindungsstellen
- 12: Kontur entlang der geschweißt und/oder gelötet wird
- 13: Verbindungsmittel zum Höhenversteller
- 14: Formschlussmittel
- 15: Schweiß-, Lötnaht
- 16: Klebestelle

## Patentansprüche

1. Verfahren zur Herstellung eines Lehnenrahmens (1) eines Kraftfahrzeugsitzes, bei dem ein erstes Bauteil (2) aus Stahl besteht und mindestens ein zweites Bauteil (3, 4) entweder aus Stahl oder aus einem Leichtbauwerkstoff besteht, wobei das erste Bauteil (2) und das mindestens eine zweite Bauteil (3, 4) jeweils einen Verbindungsbereich (2', 3', 4') aufweisen, wobei die Verbindungsbereiche (2', 3', 4') sowohl dazu geeignet sind die Verbindungsbereiche (2', 3', 4') miteinander zu verschweißen, als auch dazu geeignet sind die Verbindungsbereiche (2', 3', 4') miteinander zu verlöten, als auch dazu geeignet sind die Verbindungsbereiche (2', 3', 4') miteinander zu verkleben, wobei das erste und das mindestens eine zweite Bauteil miteinander verschweißt werden, **dadurch gekennzeichnet, dass** in jedem Verbindungsbereich (2', 3', 4') die Schweißverbindung in mindestens zwei Abschnitten ausgeführt wird, wobei der Verbindungsbereich (3', 4') des mindestens einen zweiten Bauteils (3, 4) vor dem Schweißen umgewandelt wird, um die Kontur, entlang derer geschweißt werden kann, zu erhöhen und so die Länge der Schweißnaht, die entlang der Kontur gelegt wird, zu verlängern.

2. Verfahren nach Anspruch 1, **dadurch gekennzeichnet, dass** mindestens eine Schweißverbindung zumindest abschnittsweise gekrümmt ausgeführt wird und dass vorzugsweise mindestens eine Schweißverbindung kreissegmentförmig gestaltet wird.

## Claims

1. Process for producing a backrest frame (1) of a motor vehicle seat, wherein a first component (2) consists of steel and at least one second component (3, 4) consists either of steel or of a lightweight construction material, wherein the first component (2) and the at least one second component (3, 4) each have a connection region (2', 3', 4'), wherein the connection regions (2', 3', 4') are suitable for welding the connection regions (2', 3', 4') to one another and are also suitable for soldering the connection regions (2', 3', 4') to one another and are also suitable for adhesively bonding the connection regions (2', 3', 4') to one another, wherein the first and the at least one second component are welded to one another, **characterized in that** the welded connection is made in at least two portions in each connection region (2', 3', 4'), wherein the connection region (3', 4') of the at least one second component (3, 4) is converted before welding, in order to increase the contour along which welding can be carried out and to thus lengthen the length of the weld seam placed along the contour.

2. Process according to Claim 1, **characterized in that** at least one welded connection is curved at least in certain portions and **in that** at least one welded connection is preferably configured in the shape of a circular segment.

## Revendications

1. Procédé de fabrication d'un cadre de dossier (1) d'un siège de véhicule automobile, dans lequel un premier composant (2) se compose d'acier et au moins un deuxième composant (3, 4) se compose soit d'acier, soit d'un matériau léger, le premier composant (2) et l'au moins un deuxième composant (3, 4) présentant à chaque fois une région d'assemblage (2', 3', 4'), les régions d'assemblage (2', 3', 4') étant prévues à la fois pour souder l'une à l'autre les régions d'assemblage (2', 3', 4') et pour braser l'une à l'autre les régions d'assemblage (2', 3', 4'), et étant également prévues pour coller l'une à l'autre les régions d'assemblage (2', 3', 4'), le premier et l'au moins un deuxième composant étant soudés l'un à l'autre, **caractérisé en ce que** dans chaque région d'assemblage (2', 3', 4'), l'assemblage par soudage est réalisé dans au moins deux portions, la région d'assemblage (3', 4') de l'au moins un deuxième composant (3, 4) étant transformée avant le soudage afin de rehausser le contour le long duquel le soudage doit être effectué et de prolonger ainsi la longueur du cordon de soudure qui est appliqué le long du contour.

2. Procédé selon la revendication 1, **caractérisé en ce qu'**au moins un assemblage par soudage est réalisé au moins en partie sous forme courbe et **en ce que** de préférence au moins un assemblage par soudage est configuré en forme de segment de cercle.
